# EUROPEAN PATENT SPECIFICATION

(11) **EP 4 314 544 B1**
(45) Date of publication and mention of the grant of the patent: **12.02.2025**
(21) Application number: 22728834.7
(22) Date of filing: 11.05.2022
(51) Int. Cl.: F03D 1/06

(54) **WIND TURBINE BLADE AND METHOD FOR MANUFACTURING A LEADING EDGE PROTECTION SYSTEM FOR A WIND TURBINE BLADE**
WINDTURBINENROTORBLATT UND VERFAHREN ZUR HERSTELLUNG EINES VORDERKANTENSCHUTZSYSTEMS FÜR EIN WINDTURBINENROTORBLATT
PALE D'ÉOLIENNE ET PROCÉDÉ DE FABRICATION D'UN SYSTÈME DE PROTECTION DU BORD D'ATTAQUE D'UNE PALE D'ÉOLIENNE

(30) Priority: 07.06.2021 EP 21177991
(43) Date of publication of application: 07.02.2024
(73) Proprietor: Siemens Gamesa Renewable Energy A/S, 7330 Brande (DK)
(72) Inventor: NIELSEN, Kaare Broens, 9000 Aalborg (DK); HASSERIIS, Simon Groenlund, 9000 Aalborg (DK)
(74) Representative: SGRE-Association
(86) International application number: PCT/EP2022/062837
(87) International publication number: WO 2022/258291

(56) References cited:
- WO-A1-2018/072804
- WO-A1-2019/179583

## Description

The present invention relates to a wind turbine blade with a leading edge protection system and a method for manufacturing a leading edge protection system for a wind turbine blade.

The rotor blades of wind turbines may be exposed to extreme loads and weather conditions. In particular at high speeds, raindrops, hail or bird strikes can cause damage and erosion of the leading edge of the rotor blade. Erosion of the leading edge may reduce the aerodynamic efficiency of the blade and thus the power output of the wind turbine significantly. Repairing wind turbine blades, for example after only a few years of operation, is very costly, especially in the case of offshore installations.

Known systems to protect the leading edges of wind turbine blades include adhering a protective layer to the outer surface of a blade body, as disclosed in EP 3 504 429 A1. However, tip speeds of modern large wind turbines, in particular at offshore sites, may reach 80-90 m/s or more. The impact energy caused by, for example, raindrops hitting the leading edge of the blade is increasing with increasing tip speed. Hence, leading edge protection is becoming even more important in the case of large tip speeds.

Further documents representing the prior art are e.g. WO 2019/179583 A1 and WO 2018/072804 A1.

It is one object of the present invention to provide a wind turbine blade with an improved leading edge protection system and an improved method for manufacturing a leading edge protection system for a wind turbine blade.

Accordingly, a wind turbine blade with a leading edge protection system is provided. The leading edge protection system comprises a shell portion. Further, a surface of the shell portion forms part of an outer surface of the blade. Furthermore, the shell portion includes at least one cavity integrally formed inside a material of the shell portion, and the at least one cavity is a closed cavity filled with a shock absorbing medium and/or the at least one cavity is filled with a shock absorbing material.

Having the leading edge protection system comprising the shell portion with the at least one cavity filled with the shock absorbing material and/or medium provides an improved shock absorption at the leading edge of the wind turbine blade. Thus, erosion of the leading edge of the blade during operation of the wind turbine can be better prevented. Therefore, degradation of the aerodynamic profile of the blade can be better avoided. This can improve the annual energy production of the wind turbine. Further, repairing the wind turbine blade at the leading edge is not or less often necessary.

The shell portion is, in particular, attached to a blade body of the blade. The shell portion is, in particular, attached to the blade body at a leading edge region of the blade body. The leading edge region includes, in particular, the leading edge, a portion of the suction side adjacent to the leading edge and a portion of the pressure side adjacent to the leading edge.

The blade body is, for example, manufactured from fiber-reinforced resin. However, the blade body may also be manufactured by a different method. The blade body comprises, for example a blade shell having an outer surface and an inner surface, the inner surface defining an inner cavity of the blade.

The shell portion of the leading edge protection system is, in particular, a premanufactured element. The shell portion is, in particular, a one-piece element. The shell portion is, in particular, attached to the completed blade body as a single integral premanufactured element. In case that the shell portion comprises the shock absorbing material, the shell portion together with the shock absorbing material is, in particular, a premanufactured element and/or a one-piece element, and/or the shell portion together with the shock absorbing material is attached to the completed blade body as a single integral premanufactured element.

The surface of the shell portion forming part of the outer surface of the blade is, in particular, a convex surface of the shell portion. The surface of the shell portion forming part of an outer surface of the blade forms, in particular, part of the outermost surface of the whole blade (i.e. the blade including the leading edge protection system installed). In other words, said surface of the shell portion forms, in particular, part of the aerodynamic profile of the blade in operation.

The shell portion comprises in addition to said surface forming part of the outer surface of the blade, in particular, a further surface facing the blade body. The further surface facing the blade body is, in particular, a concave surface of the shell portion.

In embodiments, the shell portion consists of the surface (concave surface) and the further surface (convex surface).

The material of the shell portion is, for example, an elastic material. The material of the shell portion includes, for example, polymer, thermoplastic polymer, polyurethane or the like.

The at least one cavity filled with the shock absorbing material is, for example, a closed cavity. Alternatively, the at least one cavity filled with the shock absorbing material is, for example, an open cavity and/or forms, for example, a recess from the further surface of the shell portion (e.g., from the surface of the shell portion facing the blade body).

The at least one closed cavity (filled with the shock absorbing medium and/or material) is, for example, surrounded completely by the material of the shell portion. In case of the closed cavity filled with the shock absorbing medium, the at least one cavity may also be surrounded by the material of the shell portion apart from an opening with a closing mechanism such as a valve.

The wind turbine blade is part of a rotor of a wind turbine. The wind turbine is an apparatus to convert the wind's kinetic energy into electrical energy. The wind turbine comprises, for example, the rotor having one or more of the blades connected each to a hub, a nacelle including a generator, and a tower holding, at its top end, the nacelle. The tower of the wind turbine may be connected to a foundation of the wind turbine such as a monopile in the seabed.

The wind turbine blade, e.g., a root portion of the blade body, is, for example fixedly connected to the hub. The wind turbine blade is, for example, directly bolted to the hub.

Alternatively, the wind turbine blade, e.g., the root portion of the blade body, is rotatably connected to the hub. For example, the wind turbine blade is connected to a pitch bearing of the wind turbine, and the pitch bearing is connected to the hub. The pitch bearing is configured to adjust the angle of attack of the blade according to the wind speed to control the rotational speed of the blade.

Apart from the essentially cylindrical root portion connected with the hub, the outer surface of the wind turbine blade has an aerodynamically shaped cross-section (airfoil). The aerodynamically shaped cross-section of the wind turbine blade comprises, for example, a pressure side (upwind side) and a suction side (downwind side). The pressure side and the suction side are connected with each other at a leading edge and a trailing edge.

As the wind turbine blade comprises the blade body and the leading edge protection system with the shell portion attached to the blade body, the overall outer surface of the blade body and the shell portion together define, as seen in cross-section, the airfoil of the blade with the leading edge, the trailing edge, the pressure side and the suction side.

According to an embodiment, the shock absorbing medium and/or material assumes a shape of the at least one cavity.

In particular, there is no gap between inner walls of the cavity and the shock absorbing medium and/or material.

The at least one cavity is, for example, filled completely with the shock absorbing material and/or medium.

According to a further embodiment, the shock absorbing medium includes a flowable medium, a gaseous medium, a liquid medium, a viscous medium, a fluid, gel and/or foam.

Having a flowable shock absorbing medium allows to easily fill the at least one cavity of the leading edge protection system. Further, a very good shock absorption can be achieved.

In particular, the shock absorbing medium includes a flowable medium, a gaseous medium, a liquid medium, a viscous medium, a fluid, gel and/or foam in the manufactured state of the leading edge protection system and/or during operation of the wind turbine.

The gaseous medium is, for example, air. However, the gaseous medium may also include another gas.

According to a further embodiment, the shock absorbing material includes an elastic material, a deformable material, a non-flowable material and/or a material being softer than the material of the shell portion.

The shock absorbing material is, for example, a non-flowable material in the manufactured state of the leading edge protection system and/or during operation of the wind turbine.

The shock absorbing material includes, for example, a polymeric material, a thermoplastic polymer and/or polyurethane.

The material of the shell portion is, for example, a first elastic material of the leading edge protection system, and the shock absorbing material is, for example, a second elastic material of the leading edge protection system.

According to a further embodiment, the shell portion or the shell portion together with the shock absorbing material filled into the cavity comprise(s) a further surface, and at least a major part of the further surface lies against an outer surface of a blade body.

Thus, an impact energy of, for example, raindrops hitting the leading edge of the blade can be better absorbed and distributed over a larger area of the blade body.

For example, the shell portion or the shell portion together with the shock absorbing material filled into the cavity are configured to lie against or abut to the outer surface of the blade body at the leading edge region.

According to a further embodiment, the shell portion or the shell portion together with the shock absorbing material filled into the cavity comprise(s) a further surface, and at least a major part of the further surface is bonded to an outer surface of a blade body.

Thus, the shell portion (with or without the shock absorbing material) can be reliably and durably fixed to the blade body.

For example, at least a major part of the further surface is bonded to the outer surface of the blade body using an adhesive. By using an adhesive a strong and stable joint between the shell portion and the blade body can be provided.

In embodiments, the further surface is bonded in its entirety to the outer surface of the blade body.

According to a further embodiment, the shell portion or the shell portion together with the shock absorbing material filled into the cavity comprise(s) a further surface, and the further surface comprises one or more indentations filled with an adhesive for bonding the shell portion to the blade body.

An adhesive bond is provided in addition to adsorption by mechanical interlocking when the adhesive flows into pores and irregularities of the adhering surface. Having the indentations in the adherend surface, the adhesive can flow into the indentations, thereby increasing the adhesive bond by mechanical interlocking. Thus, an even stronger bond between the shell portion and the blade body is achieved.

A shape of the indentations may, for example, be tapered towards the further surface.

According to a further embodiment, the shell portion or the shell portion together with the shock absorbing material filled into the cavity is/are formed by extrusion or pultrusion.

Thus, the shell portion or the shell portion together with the shock absorbing material can be easily manufactured. Further, also large (e.g., long) shell portions (with or without shock absorbing material) can be easily manufactured. Hence, a leading edge protection system covering a large fraction of the leading edge region of the blade can be provided.

According to a further embodiment, the shell portion includes several cavities being filled with different shock absorbing media and/or materials.

The different shock absorbing media and/or materials have, for example, different shock absorbing abilities. Thus, the degree of shock absorption can be appropriately varied over the leading edge region of the blade.

According to a further embodiment, the shell portion includes, as seen in cross section of the blade, several cavities and/or the shell portion includes several cavities distributed in a lengthwise direction of the blade.

Having several cavities arranged besides each other as seen in cross section of the blade allows to adapt the shock absorption strength along the airfoil of the blade. Having several cavities distributed in the lengthwise (spanwise) direction of the blade allows to adapt the shock absorption strength along the length of the blade.

According to the invention the at least one closed cavity is filled with a gaseous medium and the leading edge protection system includes means to inflate the at least one cavity.

Having the one or more inflatable cavities allows to control the leading edge geometry during operation of the wind turbine. Hence, annual energy production of the wind turbine can be improved and loads on the turbine reduced.

Further, the one or more inflatable cavities may be used for de-icing and noise reduction purposes.

The at least one closed cavity filled with the gaseous shock absorbing medium is, for example, surrounded by the material of the shell portion apart from an opening with a closing mechanism such as a valve. Hence, the at least one cavity can be filled with gas through the valve. Alternatively or in addition to one or more valves, the leading edge protection system may include a permeable membrane.

According to a further embodiment, the shell portion includes several closed cavities filled with a gaseous medium, and the inflating means are configured to inflate each cavity separately.

Thus, a fine adjustment of the leading edge geometry during operation of the wind turbine can be performed. Further, also de-icing and noise reduction measures can be better and more precisely applied.

According to a further aspect, a method for manufacturing a leading edge protection system for a wind turbine blade as described above is proposed. The method comprises the step of forming a body with at least one cavity from a raw material by extrusion or pultrusion.

The raw material is, for example, a granulate, in particular a polymeric granulate. The raw material is, for example, an elastic granulate. The production process involves, for example, deforming the raw material and/or applying pressure and/or heat to the raw material.

The method comprises, for example, a step of cutting the body to appropriate length. The body cut to length is, in particular, any of the shell portions described above.

According to an embodiment of the further aspect, the body is formed from a first raw material and the at least one cavity is filled during the extrusion or pultrusion process with at least one second raw material, the at least one second raw material being softer than the first raw material.

For example, the body and the at least one filled cavity are formed in a single process step by multi-component extrusion.

According to a further embodiment of the further aspect, the body and the at least one filled cavity are formed from the first and at least one second raw material by means of a multi-component extrusion die head or multi-component pultrusion die head.

The embodiments and features described with reference to the wind turbine blade of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows a portion of a blade of the wind turbine of Fig. 1 in a cross-section view, the blade having a leading edge protection system;
Fig. 3 shows, in cross-section view, a further embodiment of a shell portion of a leading edge protection system of the wind turbine of Fig. 1;
Fig. 4 shows, in cross-section view, a further embodiment of a shell portion of a leading edge protection system of the wind turbine of Fig. 1;
Fig. 5 shows, in cross-section view, a further embodiment of a shell portion of a leading edge protection system of the wind turbine of Fig. 1;
Fig. 6 shows, in cross-section view, a further embodiment of a shell portion of a leading edge protection system of the wind turbine of Fig. 1;
Fig. 7 shows, in cross-section view, a further embodiment of a shell portion of a leading edge protection system of the wind turbine of Fig. 1;
Fig. 8 shows, in cross-section view, a further embodiment of a shell portion of a leading edge protection system of the wind turbine of Fig. 1;
Fig. 9 shows a plan view of a shell portion of a leading edge protection system of the wind turbine of Fig. 1 according to a further embodiment;
Fig. 10 shows a view similar as Fig. 2 but for a leading edge protection system according to a further embodiment comprising an inflatable cavity;
Fig. 11 shows a view similar as Fig. 10 for a leading edge protection system according to a further embodiment comprising two inflatable cavities;
Fig. 12 shows an extruder for forming a leading edge protection system of the wind turbine of Fig. 1; and
Fig. 13 shows a flowchart illustrating a method for manufacturing a leading edge protection system for a wind turbine blade according to an embodiment.

In the figures, like reference numerals designate like or functionally equivalent elements, unless otherwise indicated.

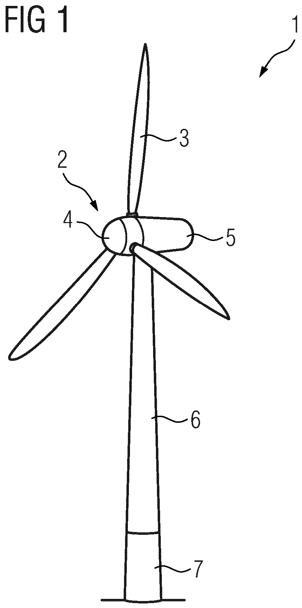

Fig. 1 shows a wind turbine 1 according to an embodiment. The wind turbine 1 comprises a rotor 2 having one or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a concrete foundation or a monopile driven into the ground or seabed.

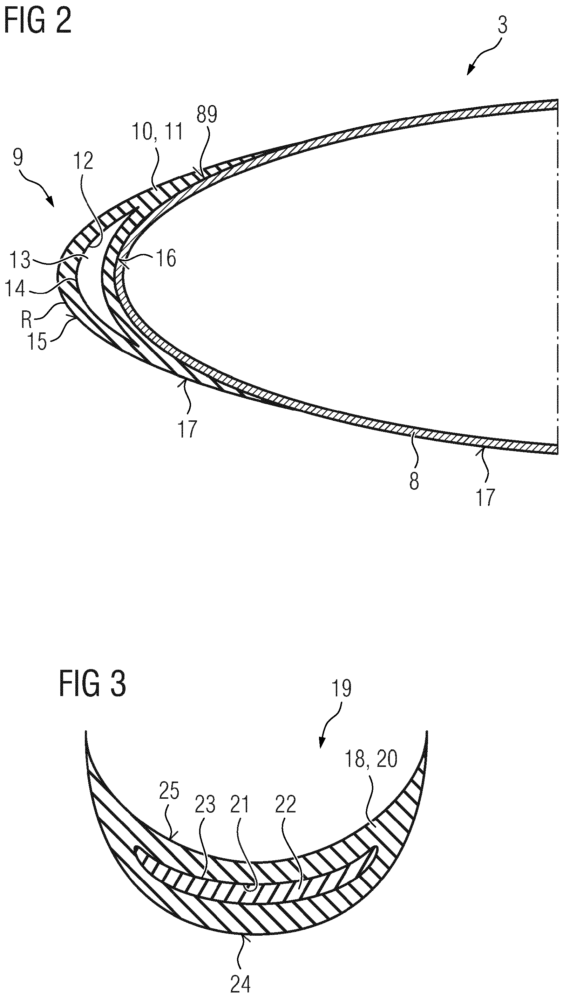

Fig. 2 shows a portion of a blade 3 of the wind turbine 1 of Fig. 1 in a cross-section view. The blade 3 comprises a blade body 8. The blade body 8 is, for example, made from fiber-reinforced laminate. The blade 3 further comprises a leading edge protection system 9 according to an embodiment. The leading edge protection system 9 comprises a shell portion 10. The shell portion 10 is made from an elastic material 11. The shell portion 10 includes a cavity 12 integrally formed inside the material 11 of the shell portion 10. The cavity 12 in the example of Fig. 2 is a closed cavity surrounded completely by the material 11 of the shell portion 10. The cavity 12 is filled with a shock absorbing medium 13. The shock absorbing medium 13 is, for example, a gaseous medium such as air. The shock absorbing medium 13 assumes, in particular, a shape 14 of the closed cavity 12. In particular, the cavity 12 in Fig. 2 is filled completely with the shock absorbing medium 13.

The shell portion 10 further comprises a surface 15 facing away from blade body 8. The surface 15 is a convex surface. The surface 15 of the shell portion 10 forms part of an outer surface 17 of the blade 3.

In addition, the shell portion 10 comprises a further surface 16 facing towards the blade body 8. The further surface 16 is a concave surface. At least a major part of the further surface 16 lies against an outer surface 89 of the blade body 8. In the example shown in Fig. 2, the further surface 16 lies entirely against the outer surface 89 of the blade body 8. Furthermore, at least a major part of the further surface 16 is bonded to the outer surface 89 of the blade body 8, for example by means of an adhesive (not shown).

Having the leading edge protection system 9 allows to reduce erosion of the blade 3 in the leading edge region R. Hence, degradation of an aerodynamic profile of the blade 3, i.e. of an aerodynamic profile defined by the outer surface 17 of the blade 3, can be better prevented.

Fig. 3 shows, in cross-section view, a further embodiment of a shell portion 18 of a leading edge protection system 19 of a blade 3 of the wind turbine 1 of Fig. 1. The shell portion 18 in the embodiment of Fig. 3 is also made from an elastic material 20 and comprises a closed cavity 21 integrally formed inside the material 20 of the shell portion 18. The cavity 21 in the example of Fig. 3 is filled with a shock absorbing elastic material 22, in particular a non-floating deformable material 22. The shock absorbing material 22 assumes a shape 23 of the closed cavity 21. In particular, the cavity 21 in Fig. 3 is filled completely with the shock absorbing material 22.

The shell portion 18 comprises a surface 24 (Fig. 3) facing away from blade body 8 (Fig. 2) and a further surface 25 (Fig. 3) facing towards the blade body 8 (Fig. 2). The surface 24 of the shell portion 18 shown in Fig. 3 forms part of an outer surface 17 (Fig. 2) of the blade 3.

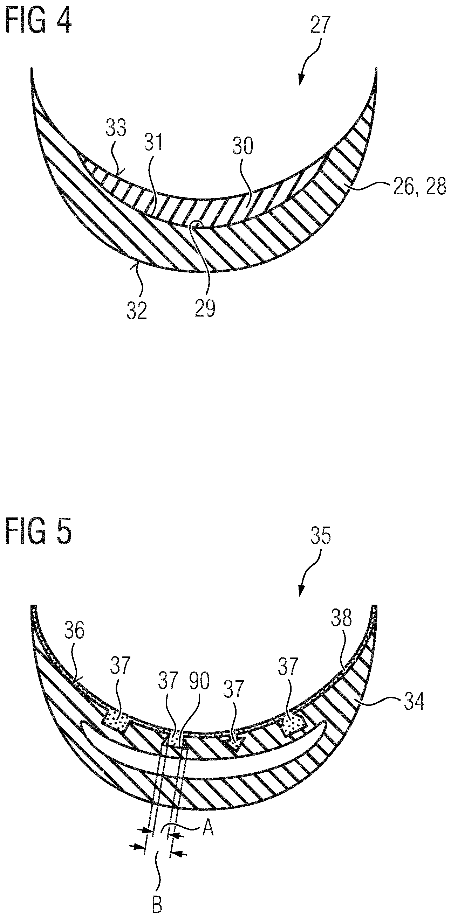

Fig. 4 shows, in cross-section view, a further embodiment of a shell portion 26 of a leading edge protection system 27 of a blade 3 of the wind turbine 1 of Fig. 1. The shell portion 26 in the embodiment of Fig. 4 is also made from an elastic material 28. Further, the shell portion 26 comprises a cavity 29 integrally formed inside the material 28 of the shell portion 26. The cavity 29 in the example of Fig. 4 is an open cavity in form a of recess.

The cavity 29 in the example of Fig. 4 is filled with a shock absorbing elastic material 30, in particular a non-floating deformable material 30. The shock absorbing material 30 assumes a shape 31 of the open cavity 29. In particular, the cavity 29 in Fig. 4 is filled completely with the shock absorbing material 30.

The shell portion 26 comprises a surface 32 (Fig. 4) facing away from the blade body 8 (Fig. 2) and a further surface 33 (Fig. 4) facing towards the blade body 8 (Fig. 2). The surface 32 of the shell portion 26 shown in Fig. 4 forms part of an outer surface 17 (Fig. 2) of the blade 3.

Fig. 5 shows, in cross-section view, a further embodiment of a shell portion 34 of a leading edge protection system 35 of a blade 3 of the wind turbine of Fig. 1. The embodiment of the shell portion 34 shown in Fig. 5 deviates from the embodiment of the shell portion 10 shown in Fig. 2 by that a further surface 36 of the shell portion 34 comprises indentations 37. The further surface 36 is (as the further surface 16 in Fig. 2) facing towards the blade body 8 (Fig. 2).

The indentations 37 are configured to be filled with an adhesive 38 for bonding the shell portion 34 to the blade body 8 (Fig. 2). Fig. 5 illustrates exemplarily four indentations 37 having different shapes. Further, the indentations 37 are shown in an exaggerated size for illustrative purposes. It is noted that the shell portion 34 may include many more indentations 37 as those shown in Fig. 5. Further, the indentations 37 may have all the same shape or may show a variety of different shapes. Further, a shape of one, some or all of the indentations 37 may, for example, be tapered towards the further surface 36. In this case a size A at the further surface 36 of a respective indentation 37 is smaller than a size B of the same indentation 37 at a bottom 90 of the respective indentation 37.

By having the indentations 37 (Fig. 5), a strength of an adhesive bond (adhesive 38 in Fig. 5) between the shell portion 34 and the blade body 8 (Fig. 2) can be increased due to an enhanced mechanical interlocking.

Although not shown in the figures, the embodiments of other shell portions described herein, such as the shell portion 18 (Fig. 3) and the shell portion 26 (Fig. 4) or other described shell portions, may also be configured to have indentations at the respective further surface (e.g., further surface 25 in Fig. 3 and further surface 33 in Fig. 4).

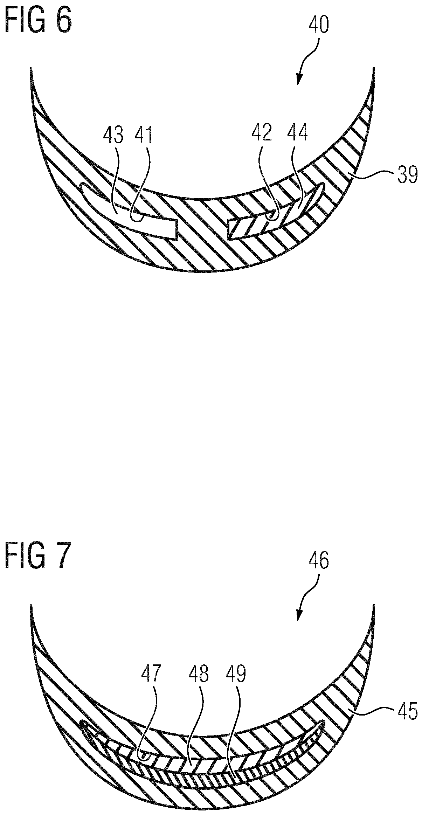

Fig. 6 shows, in cross-section view, a further embodiment of a shell portion 39 of a leading edge protection system 40 of a blade of the wind turbine of Fig. 1. The shell portion 39 deviates from the shell portions shown in Figs. 2 and 3 in that the shell portion 39 comprises two closed cavities 41, 42. In the shown example in Fig. 6, the two closed cavities 41, 42 are filled with different shock absorbing materials/media 43, 44. For example, the cavity 43 is filled with a shock absorbing medium 43 such as air. Further, the cavity 42 is, for example, filled with a non-flowable shock absorbing material 44.

In other examples, the shell portion 39 may also comprise more than two closed cavities. Further, the two or more cavities may be filled with the same shock absorbing material/medium or with different shock absorbing materials/media.

Fig. 7 shows, in cross-section view, a further embodiment of a shell portion 45 of a leading edge protection system 46 of a blade of the wind turbine of Fig. 1. The shell portion 45 deviates from the shell portion 18 shown in Fig. 3 in that a single closed cavity 47 of the shell portion 45 comprises two different shock absorbing materials 48, 49. Both shock absorbing materials 48, 49 are, in particular, non-flowable materials. The shock absorbing materials 48, 49 may differ from each other, for example, in their softness. In other examples, the closed cavity 47 may also comprise more than two different shock absorbing materials 48, 49.

It is noted that also the cavity 29 of the shell portion 26 shown in Fig. 4 or the one or more cavities 41, 42 shown in Fig. 6 may be filled with two or more different shock absorbing materials in a similar manner as in Fig. 7.

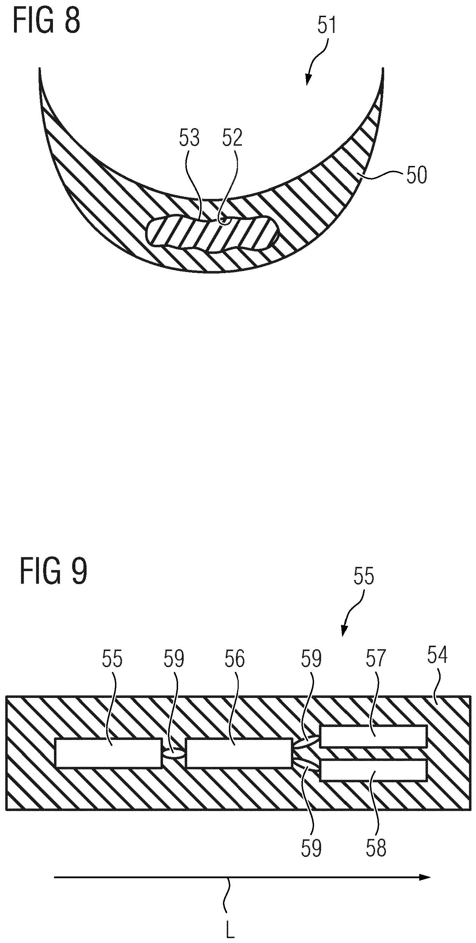

Fig. 8 shows, in cross-section view, a further embodiment of a shell portion 50 of a leading edge protection system 51 of a blade of the wind turbine of Fig. 1. The shell portion 50 deviates from the shell portion 18 shown in Fig. 3 in that a closed cavity 52 of the shell portion 50 has, as seen in cross-section, a different geometric shape 53. In particular, the shape 53 of the cavity 52 in Fig. 8 is an irregular shape.

It is noted that the cavities 12 (Fig. 2), 21 (Fig. 3), 29 (Fig. 4), 41 and 42 (Fig. 6), 47 (Fig. 7) and 52 (Fig. 8) can have any suitable cross-section shape.

Fig. 9 shows a plan view of a shell portion 54 of a leading edge protection system 55 of a blade of the wind turbine 1 of Fig. 1 according to a further embodiment. As illustrated in Fig. 9, the shell portion 54 may include several cavities 55, 56, 57, 58 distributed in a lengthwise direction L (Fig. 9) of the blade 3 (Figs. 1 and 2). One, some or all of the cavities 55, 56, 57, 58 may be closed cavities (as in Figs. 2, 3 and 5-8) and/or one, some or all of the cavities 55, 56, 57, 58 may be open cavities (as in Fig. 4). One, some or all of the cavities 55, 56, 57, 58 may be filled with a shock absorbing medium and/or one, some or all of the cavities 55, 56, 57, 58 may be filled with a shock absorbing material. In the case that some or all of the cavities 55, 56, 57, 58 are filled with a gaseous shock absorbing medium, the respective cavities 55, 56, 57, 58 may be interconnected with valves 59 (Fig. 9).

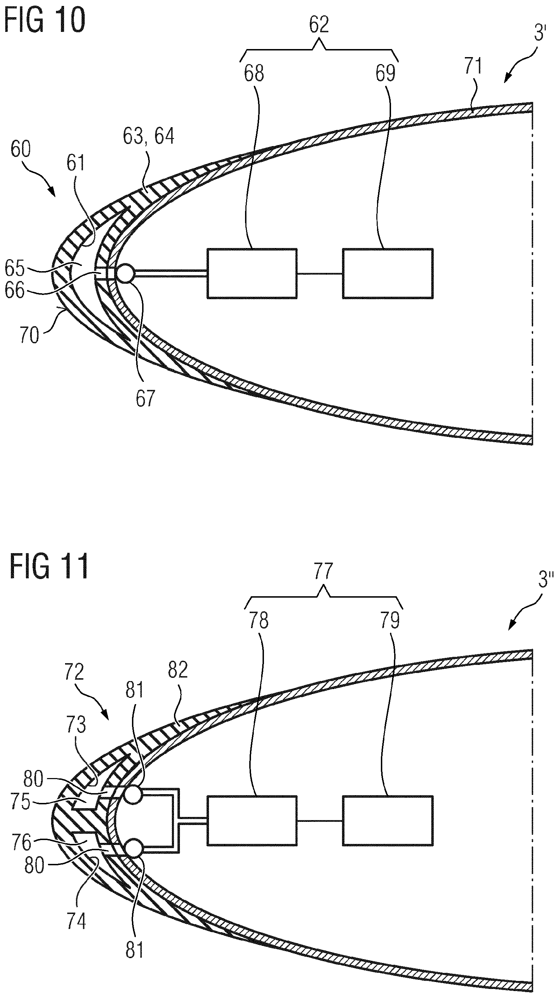

Fig. 10 shows a view similar as Fig. 2 but with a leading edge protection system 60 according to the invention, the leading edge protection system 60 comprising an inflatable cavity 61 and inflating means 62. In the embodiment of Fig. 10, a shell portion 63 of the leading edge protection system 60 is also made of an elastic material 64. Further, the shell portion 63 also comprises a closed cavity 61 filled with a shock absorbing medium 65, namely a gaseous medium 65. However, in contrast to the embodiment of Fig. 2, the cavity 61 comprises an opening 66 closed with a valve 67. Furthermore, the inflating means 62 comprise, for example, a pump 68 and a motor 69. By pumping a gas such as air by means of the pump 68 into the cavity 61, the outer surface 70 of the shell portion 63 can be moved outwards (i.e. away from the blade body 71). Further, by pumping a gas such as air by means of the pump 68 out of the cavity 61, the outer surface 70 of the shell portion 63 can be moved inwards (i.e. towards the blade body 71). This allows to adjust the leading edge geometry of the blade 3' during operation of the wind turbine 1 for improving an aerodynamic performance, for de-icing and/or noise reduction. Although not shown, the opening 66 may also be closed by means of a permeable membrane such that the cavity 61 can be filled and drained through the membrane.

Fig. 11 shows a variant of the embodiment of Fig. 10. A leading edge protection system 72 of a blade 3" in the embodiment of Fig. 11 comprises two inflatable cavities 73, 74 filled each with a gaseous shock absorbing medium 75, 76. Further, inflating means 77 comprise, for example, a pump 78 and a motor 79 for pumping gas through openings 80 closed by valves 81 for adjusting the aerodynamic shape of the blade 3". The inflating means 77 are, in particular, configured to inflate each cavity 73, 74 separately. Although not shown, the shell portion 82 of the leading edge protection system 72 may also comprise more than two (e.g., separately) inflatable cavities 73, 74. For example, the cavities 55, 56, 57 and 58 shown in Fig. 9 may also be (e.g., separately) inflatable cavities.

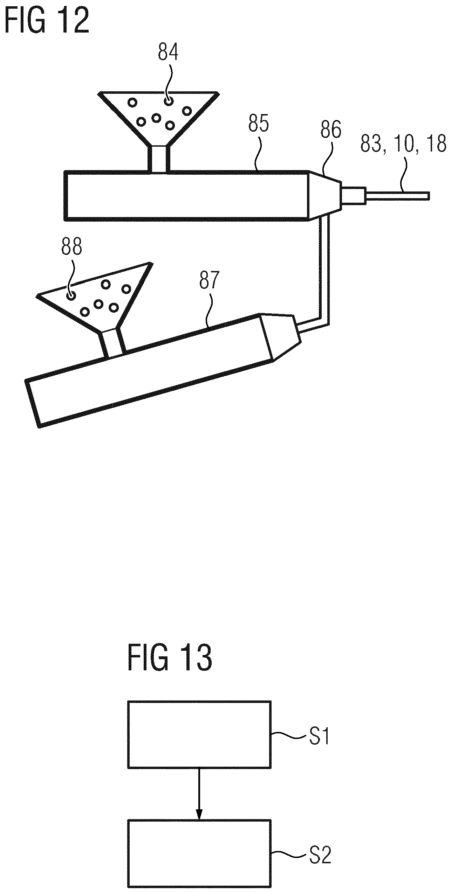

In the following, a method for manufacturing a leading edge protection system, such as the leading edge protection system 9, 19, 27, 35, 40, 46, 51, 55, 60, 72 shown in the previous figures, is described with respect to Figs. 12 and 13.

In a first step S1, a body 83 (Fig. 12) is extruded from a raw material 84, in particular from elastic polymeric granules. At least one extruder 85 is provided for this purpose. The extruder 85 presses the raw material 84, applying pressure and heat, through an extrusion head 86. The extrusion head 86 has a suitable profile to form a body 83 with a cavity serving as a shell portion for a leading edge protection system such as the shell portion 10 with the cavity 12 shown in Fig. 2 or any other shell portion described herein. Accordingly, after the extrusion head (die head) 86, a smooth body 83 with a cavity is produced such as the shell portion 10 with the cavity 12 shown in Fig. 2 or any other shell portion described herein.

In a second step S2, the correspondingly manufactured shell portion 83 is suitably cut to length by a cutting device (not shown) to form a shell portion (e.g., 10 in Fig. 2).

Furthermore, an additional extruder 87 (Fig. 12) can be provided, which presses another raw material 88, for example another elastic polymeric granulate, through the die head 86 (also referred to as co-extrusion), which in this case is designed as a multi-component extrusion die head. This allows to manufacture, for example, the shell portion 18 filled with one or more shock absorbing materials 22 (Fig. 3). In particular, the shell portion 18 filled with one or more shock absorbing materials 22 can be manufactured in a single process step. In particular, the body 83 is formed from the first raw material 84 and the at least one cavity (e.g., cavity 21 in Fig. 3) is filled during the extrusion process with at least one second raw material 88. Further, the at least one second raw material 88 is softer than the first raw material 84. In this way, a shell portion filled with one or more shock absorbing materials can be easily manufactured.

Although the present invention has been described in accordance with preferred embodiments, it is obvious for the person skilled in the art that modifications are possible in all embodiments.

## Claims

1. A wind turbine blade (3) with a leading edge protection system (9, 19, 27,60), wherein: the leading edge protection system (9, 19, 27, 60) comprises a shell portion (10, 18, 26, 82), a surface (15, 24, 32) of the shell portion (10, 18, 26, 82) forms part of an outer surface (17) of the blade, the shell portion (10, 18, 26, 82) includes at least one cavity (12, 21, 29) integrally formed inside a material (11, 20, 28) of the shell portion (10, 18, 26, 82), and the at least one cavity (121) is a closed cavity filled with a shock absorbing medium (13) and/or the at least one cavity (21, 29) is filled with a shock absorbing material (22, 30); wherein the at least one closed cavity (61) is filled with a gaseous medium (65) **characterised in that** the leading edge protection system (60) includes means (62) to inflate the at least one cavity (61).

2. The wind turbine blade according to claim 1, wherein the shock absorbing medium (13) and/or material (22, 30) assumes a shape (14, 23, 31) of the at least one cavity (12, 21, 29).

3. The wind turbine blade according to claim 1 or 2, wherein the shock absorbing medium (13) includes a flowable medium, a gaseous medium, a liquid medium, a viscous medium, a fluid, gel and/or foam.

4. The wind turbine blade according to one of claims 1-3, wherein the shock absorbing material (22, 30) includes an elastic material, a deformable material, a non-flowable material and/or a material being softer than the material (20, 28) of the shell portion (18, 26).

5. The wind turbine blade according to one of claims 1-4, wherein the shell portion (10, 18) or the shell portion (26) together with the shock absorbing material (30) filled into the cavity (29) comprise(s) a further surface (16, 25, 33), and at least a major part of the further surface (16, 25, 33) lies against an outer surface (89) of a blade body (8).

6. The wind turbine blade according to one of claims 1-5, wherein the shell portion (10, 18) or the shell portion (26) together with the shock absorbing material (30) filled into the cavity (29) comprise(s) a further surface (16, 25, 33), and at least a major part of the further surface (16, 25, 33) is bonded to an outer surface (89) of a blade body (8).

7. The wind turbine blade according to one of claims 1-6, wherein the shell portion (10, 18, 34) or the shell portion (26) together with the shock absorbing material (30) filled into the cavity (29) comprise(s) a further surface (16, 25, 33, 36), and the further surface (16, 25, 33, 36) comprises one or more indentations (37) filled with an adhesive (38) for bonding the shell portion (10, 18, 26, 34) to a blade body (8).

8. The wind turbine blade according to one of claims 1-7, wherein the shell portion (10, 18) or the shell portion (26) together with the shock absorbing material (30) filled into the cavity (29) is/are formed by extrusion or pultrusion.

9. The wind turbine blade according to one of claims 1-8, wherein the shell portion (39) includes several cavities (41, 42) being filled with different shock absorbing media and/or materials (43, 44).

10. The wind turbine blade according to claim 9, wherein the shell portion (39) includes, as seen in cross section of the blade, several cavities (41, 42) and/or the shell portion (54) includes several cavities (55, 56) distributed in a lengthwise direction (L) of the blade.

11. The wind turbine blade according to one of the claims 1-10, wherein the shell portion (82) includes several closed cavities (73, 74) filled with a gaseous medium (75, 76), and the inflating means (77) are configured to inflate each cavity (73, 74) separately.

12. A method for manufacturing a leading edge protection system (9, 19, 27, 60) for a wind turbine blade (3) according to one of claims 1 - 11, the method comprising the step of
forming (S1) a body (83, 10, 18, 26) with at least one cavity (12, 21, 29) from a raw material (84) by extrusion or pultrusion.

13. The method according to claim 12, wherein the body (83, 10, 18, 26) is formed from a first raw material (84) and the at least one cavity (12, 21, 29) is filled during the extrusion or pultrusion process with at least one second raw material (88), the at least one second raw material (88) being softer than the first raw material (84).

14. The method according to claim 13, wherein the body (83, 10, 18, 26) and the at least one filled cavity (12, 21, 29) are formed from the first and at least one second raw material (84, 88) by means of a multi-component extrusion die head (86) or multi-component pultrusion die head.

## Patentansprüche

1. Windturbinenblatt (3) mit einem Vorderkantenschutzsystem (9, 19, 27, 60), wobei: das Vorderkantenschutzsystem (9, 19, 27, 60) einen Schalenabschnitt (10, 18, 26, 82) umfasst, wobei eine Oberfläche (15, 24, 32) des Schalenabschnitts (10, 18, 26, 82) einen Teil einer Außenfläche (17) des Blatts bildet, wobei der Schalenabschnitt (10, 18, 26, 82) mindestens einen Hohlraum (12, 21, 29) enthält, der in einem Material (11, 20, 28) des Schalenabschnitts (10, 18, 26, 82) einteilig gebildet ist, und der mindestens eine Hohlraum (121) ein geschlossener Hohlraum ist, der mit einem stoßdämpfenden Medium (13) gefüllt ist und/oder der mindestens eine Hohlraum (21, 29) mit einem stoßdämpfenden Material (22, 30) gefüllt ist; wobei der mindestens eine geschlossene Hohlraum (61) mit einem gasförmigen Medium (65) gefüllt ist, **dadurch gekennzeichnet, dass** das Vorderkantenschutzsystem (60) Mittel (62) enthält, um den mindestens einen Hohlraum (61) aufzublasen.

2. Windturbinenblatt nach Anspruch 1, wobei das stoßdämpfende Medium (13) und/oder Material (22, 30) eine Form (14, 23, 31) des mindestens einen Hohlraums (12, 21, 29) annimmt.

3. Windturbinenblatt nach Anspruch 1 oder 2, wobei das stoßdämpfende Medium (13) ein fließfähiges Medium, ein gasförmiges Medium, ein flüssiges Medium, ein viskoses Medium, ein Fluid, Gel und/oder Schaum enthält.

4. Windturbinenblatt nach einem der Ansprüche 1-3, wobei das stoßdämpfende Material (22, 30) ein elastisches Material, ein verformbares Material, ein nicht fließfähiges Material und/oder ein Material, das weicher ist als das Material (20, 28) des Schalenabschnitts (18, 26), enthält.

5. Windturbinenblatt nach einem der Ansprüche 1-4, wobei der Schalenabschnitt (10, 18) oder der Schalenabschnitt (26) zusammen mit dem stoßdämpfenden Material (30), das in den Hohlraum (29) gefüllt ist, eine weitere Oberfläche (16, 25, 33) aufweisen und zumindest ein Hauptteil der weiteren Oberfläche (16, 25, 33) an einer Außenfläche (89) eines Blattkörpers (8) anliegt.

6. Windturbinenblatt nach einem der Ansprüche 1-5, wobei der Schalenabschnitt (10, 18) oder der Schalenabschnitt (26) zusammen mit dem stoßdämpfenden Material (30), das in den Hohlraum (29) gefüllt ist, eine weitere Oberfläche (16, 25, 33) aufweisen und zumindest ein Hauptteil der weiteren Oberfläche (16, 25, 33) mit einer Außenfläche (89) des Blattkörpers (8) verbunden ist.

7. Windturbinenblatt nach einem der Ansprüche 1-6, wobei der Schalenabschnitt (10, 18, 34) oder der Schalenabschnitt (26) zusammen mit dem stoßdämpfenden Material (30), das in den Hohlraum (29) gefüllt ist, eine weitere Oberfläche (16, 25, 33, 36) aufweisen und die weitere Oberfläche (16, 25, 33, 36) eine oder mehrere Einkerbungen (37) aufweist, die mit einem Klebstoff (38) gefüllt sind, um den Schalenabschnitt (10, 18, 26, 34) mit einem Blattkörper (8) zu verbinden.

8. Windturbinenblatt nach einem der Ansprüche 1-7, wobei der Schalenabschnitt (10, 18) oder der Schalenabschnitt (26) zusammen mit dem stoßdämpfenden Material (30), das in den Hohlraum (29) gefüllt ist, durch Extrusion oder Pultrusion gebildet sind.

9. Windturbinenblatt nach einem der Ansprüche 1-8, wobei der Schalenabschnitt (39) mehrere Hohlräume (41, 42) enthält, die mit unterschiedlichen stoßdämpfenden Medien und/oder Materialien (43, 44) gefüllt sind.

10. Windturbinenblatt nach Anspruch 9, wobei der Schalenabschnitt (39), wie im Querschnitt des Blattes zu sehen ist, mehrere Hohlräume (41, 42) enthält und/oder der Schalenabschnitt (54) mehrere Hohlräume (55, 56) enthält, die in Längsrichtung (L) des Blattes verteilt sind.

11. Windturbinenblatt nach einem der Ansprüche 1-10, wobei der Schalenabschnitt (82) mehrere geschlossene Hohlräume (73, 74) enthält, die mit einem gasförmigen Medium (75, 76) gefüllt sind, und die Aufblasmittel (77) konfiguriert sind, jeden Hohlraum (73, 74) separat mit Gas zu befüllen.

12. Verfahren zum Herstellen eines Vorderkantenschutzsystems (9, 19, 27, 60) für ein Windturbinenblatt (3) nach einem der Ansprüche 1-11, wobei das Verfahren den Schritt des Bildens (S1) eines Körpers (83, 10, 18, 26) mit mindestens einem Hohlraum (12, 21, 29) aus einem Rohmaterial (84) durch Extrusion oder Pultrusion umfasst.

13. Verfahren nach Anspruch 12, wobei der Körper (83, 10, 18, 26) aus einem ersten Rohmaterial (84) gebildet wird und der mindestens eine Hohlraum (12, 21, 29) während des Extrusions- oder Pultrusionsvorgangs mit mindestens einem zweiten Rohmaterial (88) gefüllt wird, wobei das mindestens eine zweite Rohmaterial (88) weicher ist als das erste Rohmaterial (84).

14. Verfahren nach Anspruch 13, wobei der Körper (83, 10. 18, 26) und der mindestens eine gefüllte Hohlraum (12, 21, 29) aus dem ersten und dem mindestens einen zweiten Rohmaterial (84, 88) mittels eines Mehrkomponenten-Extrusionsdüsenkopfs (86) oder eines Mehrkomponenten-Pultrusionsdüsenkopfs gebildet wird.

## Revendications

1. Pale d'éolienne (3) munie d'un système de protection de bord d'attaque (9, 19, 27, 60), dans laquelle : le système de protection de bord d'attaque (9, 19, 27, 60) comprend une section de coque (10, 18, 26, 82), une surface (15, 24, 32) de la section de coque (10, 18, 26, 82) forme une partie d'une surface externe (17) de la pale, la section de coque (10, 18, 26, 82) inclut au moins une cavité (12, 21, 29) formée d'un seul tenant à l'intérieur d'un matériau (11, 20, 28) de la section de coque (10, 18, 26, 82), et l'au moins une cavité (121) est une cavité fermée remplie par un milieu absorbeur de chocs (13) et/ou l'au moins une cavité (21, 29) est remplie par un matériau absorbeur de chocs (22, 30) ; et dans laquelle l'au moins une cavité fermée (61) est remplie par un milieu gazeux (65),
**caractérisée en ce que** le système de protection de bord d'attaque (60) inclut un moyen (62) pour gonfler l'au moins une cavité (61) .

2. Pale d'éolienne selon la revendication 1, dans laquelle le milieu absorbeur de chocs (13) et/ou le matériau absorbeur de chocs (22, 30) prennent ou prend une forme (14, 23, 31) de l'au moins une cavité (12, 21, 29).

3. Pale d'éolienne selon la revendication 1 ou 2, dans laquelle le milieu absorbeur de chocs (13) inclut un milieu fluable, un milieu gazeux, un milieu liquide, un milieu visqueux, un fluide, un gel et/ou une mousse.

4. Pale d'éolienne selon l'une quelconque des revendications 1 à 3, dans laquelle le matériau absorbeur de chocs (22, 30) inclut un matériau élastique, un matériau déformable, un matériau non fluable et/ou un matériau qui est plus mou que le matériau (20, 28) de la section de coque (18, 26).

5. Pale d'éolienne selon l'une quelconque des revendications 1 à 4, dans laquelle la section de coque (10, 18) ou la section de coque (26) en association avec le matériau absorbeur de chocs (30) rempli à l'intérieur de la cavité (29) comprend une autre surface (16, 25, 33), et au moins une partie importante de l'autre surface (16, 25, 33) est étendue contre une surface externe (89) d'un corps de pale (8).

6. Pale d'éolienne selon l'une quelconque des revendications 1 à 5, dans laquelle la section de coque (10, 18) ou la section de coque (26) en association avec le matériau absorbeur de chocs (30) rempli à l'intérieur de la cavité (29) comprend une autre surface (16, 25, 33), et au moins une partie importante de l'autre surface (16, 25, 33) est liée à une surface externe (89) d'un corps de pale (8).

7. Pale d'éolienne selon l'une quelconque des revendications 1 à 6, dans laquelle la section de coque (10, 18, 34) ou la section de coque (26) en association avec le matériau absorbeur de chocs (30) rempli à l'intérieur de la cavité (29) comprend une autre surface (16, 25, 33, 36), et l'autre surface (16, 25, 33, 36) comprend une ou plusieurs indentations (37) remplies par un adhésif (38) pour lier la section de coque (10, 18, 26, 34) à un corps de pale (8).

8. Pale d'éolienne selon l'une quelconque des revendications 1 à 7, dans laquelle la section de coque (10, 18) ou la section de coque (26) en association avec le matériau absorbeur de chocs (30) rempli à l'intérieur de la cavité (29) est formée par extrusion ou par pultrusion.

9. Pale d'éolienne selon l'une quelconque des revendications 1 à 8, dans laquelle la section de coque (39) inclut plusieurs cavités (41, 42) qui sont remplies par des milieux et/ou matériaux absorbeurs de chocs différents (43, 44).

10. Pale d'éolienne selon la revendication 9, dans laquelle la section de coque (39) inclut, tel que vu selon une coupe transversale de la pale, plusieurs cavités (41, 42) et/ou la section de coque (54) inclut plusieurs cavités (55, 56) qui sont distribuées dans une direction de longueur (L) de la pale.

11. Pale d'éolienne selon l'une quelconque des revendications 1 à 10, dans laquelle la section de coque (82) inclut plusieurs cavités fermées (73, 74) remplies par un milieu gazeux (75, 76), et le moyen de gonflage (77) est configuré pour gonfler séparément chaque cavité (73, 74).

12. Procédé pour fabriquer un système de protection de bord d'attaque (9, 19, 27, 60) pour une pale d'éolienne (3) selon l'une quelconque des revendications 1 à 11, le procédé comprenant l'étape de
formation (S1) d'un corps (83, 10, 18, 26) de sorte qu'il comporte au moins une cavité (12, 21, 29) à partir d'un matériau brut (84) par extrusion ou par pultrusion.

13. Procédé selon la revendication 12, dans lequel le corps (83, 10, 18, 26) est formé à partir d'un premier matériau brut (84) et l'au moins une cavité (12, 21, 29) est remplie pendant le processus d'extrusion ou de pultrusion par au moins un second matériau brut (88), l'au moins un second matériau brut (88) étant plus mou que le premier matériau brut (84).

14. Procédé selon la revendication 13, dans lequel le corps (83, 10, 18, 26) et l'au moins une cavité remplie (12, 21, 29) sont formés à partir du premier matériau brut et d'au moins un second matériau brut (84, 88) au moyen d'une tête de filière d'extrusion à multiples composants (86) ou d'une tête de filière de pultrusion à multiples composants.
